# EUROPEAN PATENT APPLICATION

(11) **EP 4 817 907 A1**
(43) Date of publication of application: **07.10.2026**
(21) Application number: 26167808.0
(22) Date of filing: 25.03.2026
(51) Int. Cl.: B60H 1/00, F02B 63/04, F02B 65/00, F02B 77/04, F25D 11/00, H02J 7/14

(54) **SYSTEM AND METHOD FOR REMOVING SOOT BUILDUP FROM AN ENGINE OF A TRANSPORT REFRIGERATION UNIT**

(30) Priority: 26.03.2025 US 202563778153 P
(71) Applicant: Carrier Corporation, Palm Beach Gardens, FL 33418 (US)
(72) Inventor: VENNE, Samuel, East Syracuse, 13057 (US); STOCKBRIDGE, Michael, East Syracuse, 13057 (US); TOSCANO, Luis, East Syracuse, 13057 (US)
(74) Representative: Dehns

(57) **Abstract**

A transportation refrigeration system (100), having a cargo box (120) extending from a front end (130) to an aft end (140) and defining an interior cargo space (122) for transporting goods; a transportation refrigeration unit (a TRU) (150) at the front end of the cargo box, wherein the TRU has a cooling system (155) to maintain the interior cargo space at a set temperature, and wherein the TRU has a controller (160), a power source (245) operationally coupled to the controller (160), and a dump load circuit (450) operationally coupled to the controller (160) and the power source (245), wherein the power source (245) has a subsystem (235), and the controller (160) is configured to control the dump load circuit (450) to increase a load on the power source (245), thereby removing soot buildup from the subsystem (235).

## Description

### BACKGROUND

The embodiments described herein are directed to a transportation refrigeration unit (TRU) and more specifically to a system and method for removing soot buildup from an engine of a TRU.

A transport refrigeration engine needs to run utilizing a specified amount of load to maintain an efficient and clean running engine. Diesel engines need to be able to remove soot buildup that occurs on the fuel injectors and diesel oxidation catalysts (DOCs). When these implements do not have enough load from the system, the soot buildup can be exhausted out as black smoke to the environment.

### BRIEF SUMMARY

According to a first aspect of the invention there is provided a transportation refrigeration system, the transport refrigeration system including a cargo box extending from a front end to an aft end and defining an interior cargo space for transporting goods; a transportation refrigeration unit (a TRU) at the front end of the cargo box, wherein the TRU includes a cooling system to maintain the interior cargo space at a set temperature, and wherein the TRU includes a controller, a power source operationally coupled to the controller, and a dump load circuit operationally coupled to the controller and the power source, wherein the power source includes a subsystem, and the controller is configured to control the dump load circuit to increase a load on the power source, thereby removing soot buildup from the subsystem.

Optionally, the power source includes an engine.

Optionally, the power source includes a generator powered by the engine.

Optionally, the dump load circuit is operationally coupled to the generator.

Optionally, the dump load circuit includes power load resistors (PLRs).

Optionally, the PLRs are arranged in a star configuration and connected to the power source via a relay.

Optionally, the subsystem of the power source includes one or more of an injector assembly and a diesel oxidation catalyst.

Optionally, the TRU includes TRU electrical implements that are powered by the power source, wherein the controller is configured to control one or more of the TRU electrical implements and the dump load circuit to simultaneously generate the load on the power source.

Optionally, the controller is configured to activate the dump load circuit when loading from the TRU electrical implements is under a loading threshold for a period of time that exceeds a time threshold.

Optionally, the TRU electrical implements include one or more of a compressor motor for powering a compressor of the TRU, a battery charger for an energy storage system of the TRU, evaporator heaters for heating the evaporator of the TRU, an evaporator fan for directing air to the evaporator, and condenser fans for directing air to a condenser of the TRU.

According to a second aspect of the invention there is provided a method of operating a transportation refrigeration system, including: controlling, by a controller of a transportation refrigeration unit (a TRU), a dump load circuit that is operationally coupled to a power source of the TRU to increase a load on the power source, thereby removing soot buildup from a subsystem of the power source.

Optionally, the power source includes an engine.

Optionally, the power source includes a generator powered by the engine.

Optionally, the dump load circuit is operationally coupled to the generator.

Optionally, the dump load circuit includes power load resistors (PLRs).

Optionally, the PLRs are arranged in a star configuration and connected to the power source via a relay.

Optionally, the subsystem of the power source includes one or more of an injector assembly and a diesel oxidation catalyst.

Optionally, the method includes controlling, by the controller, one or more TRU electrical implements of the TRU that are powered by the power source, and the dump load circuit, to simultaneously generate the load on the power source.

Optionally, the method includes activating, by the controller, the dump load circuit when loading from TRU electrical implements is under a loading threshold for a period of time that exceeds a time threshold.

Optionally, the TRU electrical implements include one or more of a compressor motor for powering a compressor of the TRU, a battery charger for an energy storage system of the TRU, evaporator heaters for heating the evaporator of the TRU, an evaporator fan for directing air to the evaporator, and condenser fans for directing air to a condenser of the TRU.

### BRIEF DESCRIPTION OF THE DRAWINGS

The present invention is illustrated by way of example only and not limited to the accompanying figures in which like reference numerals indicate similar elements.
FIG. 1A shows a transportation refrigeration system configured to conserve energy by automatically executing a start and stop mode or a continuous run mode;
FIG. 1B is a rear perspective view of a transportation refrigeration unit (TRU) utilized with the system;
FIG. 2A shows details of the TRU of the disclosed system in a front view;
FIG. 2B shows details of the TRU of the disclosed system in a rear view;
FIG. 3 shows a dump load circuit utilized to increase loading on a (Diesel) power source for the TRU, wherein the dump load circuit includes a set of power load resistors (PLRs); and
FIG. 4 is a flowchart showing a method of operating a power source of a TRU to remove soot buildup from a subsystem of the power source; and
FIG. 5 is another flowchart showing a method of operating a power source of a TRU to remove soot buildup from a subsystem of the power source.

### DETAILED DESCRIPTION

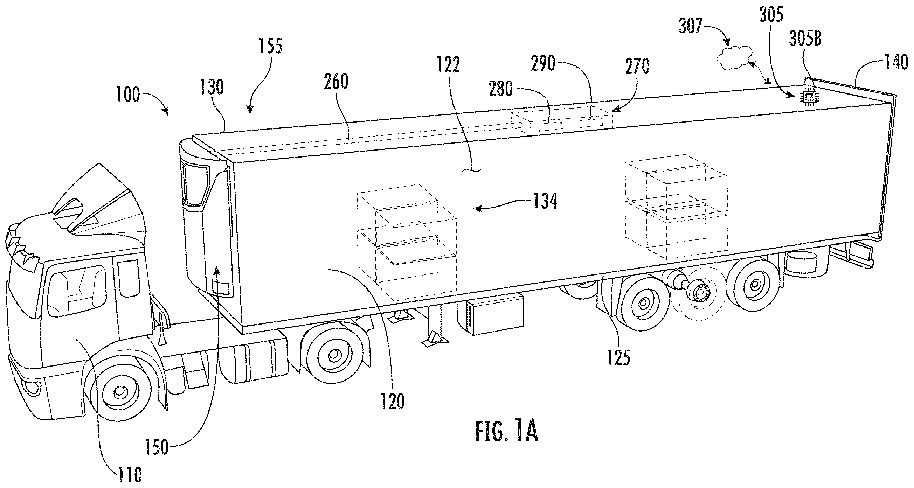

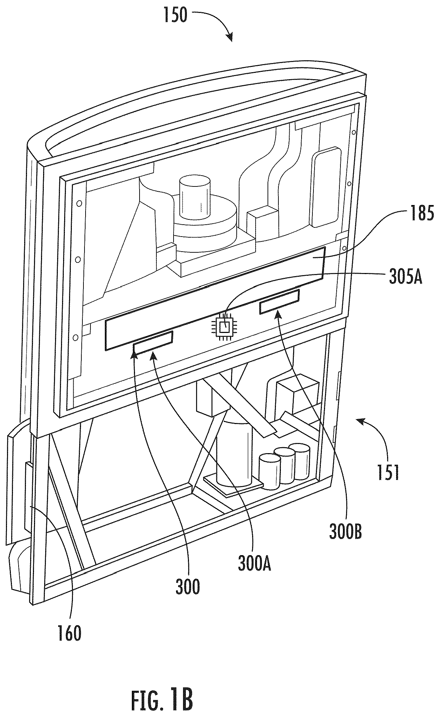

Turning to FIGS. 1A and 1B, a transport refrigeration system 100 is shown. The system 100 includes a truck 110 that hauls a cargo box 120, such as a refrigerated shipping container supported on a trailer 125. The cargo box 120 extends from a front end 130 to an aft end 140 defining an interior cargo space 122 in which goods 134 of different types are shipped, including nonperishable and perishable goods, i.e., frozen or fresh perishable goods. Perishable goods typically have a short shelf life, such as fruit, vegetables, dairy, and plants. Non-perishable goods may not need extensive or any refrigeration, such as tinned or vacuum-packed goods

The front end 130 of the cargo box 120 includes a transportation refrigeration unit (TRU) 150. The TRU 150 has a cooling system 155 that is capable of maintaining a setpoint temperature (or set temperature) T1 with the interior cargo space 122.

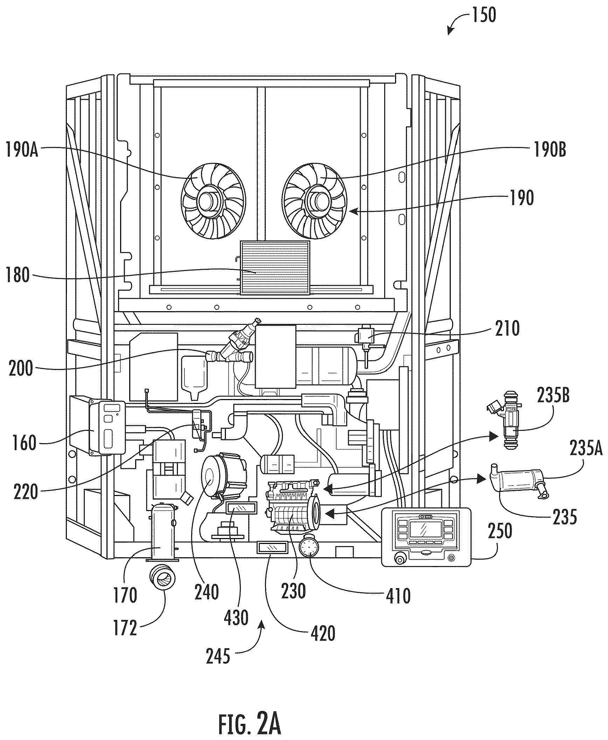

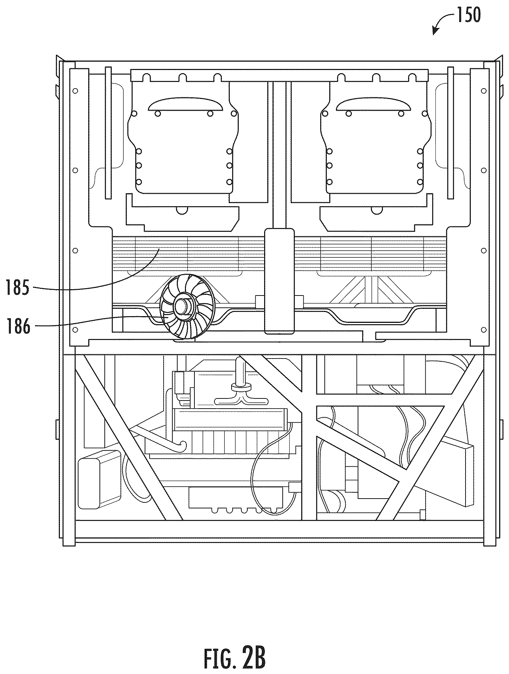

Specifically, as shown in FIGS. 2A and 2B, the TRU 150 includes a controller 160. The controller 160 may be an electronics controller, with an internal processor and non-transitory memory, and the controller 160 may use a CAN-bus communication protocol, as a non-limiting embodiment. A flow motivator 170 of the TRU 150 may be a compressor 170, driven by a compressor motor 172, that pushes a flow of refrigerant through the system 100. The TRU 150 may also have a condenser coil 180, which may be a microchannel condenser coil, that is accompanied by first and second fans 190A, 190B, generally reference as 190. An evaporator coil 185 is shown in FIG. 2B, which is accompanied by an evaporator fan 186. A suction modulation valve 200 of the TRU 150 may control the flow of refrigerant gas into the compressor 170 to regulate temperature control and compressor power. The TRU 150 may also have an expansion valve 210 and an economizer 220 that acts as an evaporator to more precisely control the temperature and flow of the refrigerant entering a main evaporator. An engine 230 of the TRU 150 is controlled by the controller 160 and powers a generator 240 to produce electricity that powers the electrical components of the TRU 150. The engine 230 and generator 240 can be separately or collectively be considered a power source 245. For example, while the generator 240 may run off the engine 230, in some embodiments the generator 240 may run directly off fuel. The engine 230, which may run off diesel fuel, may include a DOC (diesel oxidation catalyst) 235A and an injector assembly 235B (each a subsystem and collectively subsystems 235 of the power source 245). A user interface 250 of the TRU 150 enables a user to access information stored in the controller 160 and engage user provided controls.

Turning back to FIGS. 1A and 1B, the system 100 may include cooling tubes 260 that lead from the primary refrigeration unit (FIG. 1B) to an air chute 270 within the cargo box 120. The air chute 270 includes a secondary evaporator coil 280 and a blower 290. The cooling tubes 260 and air chute 270 are optional and may be replaced with a fan that blows cooled air supplied from the TRU 150 via a duct.

For defrosting the evaporator coil 185, the TRU 150 may have first and second heating elements 300A, 300B, generally referenced as 300, located near, e.g., under the evaporator coil 185 and controlled by the controller 160. To control operation of the compressor 170, the system 100 may include one or more of a first temperature sensor (first sensor) 305A located at the evaporator coil 185 and a second temperature sensor (second sensor) 305B located within the cargo box 120, each indicative a temperature within the cargo box 120. The sensors 305 may communicate with the controller 160 using wired or wireless protocols, e.g., over a network 307. The sensors 305 may be temperature sensors and more specifically return air temperature (RAT) sensors.

In one embodiment, one or more of the compressor motor 172, the evaporator heaters 300, the condenser fans 190 and the evaporator fan 186, which are separately and collectively referred to as TRU electrical implements 151, may be powered by the generator 240, which as indicated, is powered by the engine 230. -It is to be appreciated that the disclosed configuration of the TRU 150 is a non-limiting example.

The system 100, via the controller 160, may monitor power consumption for the TRU 150, e.g., depending on the energy source utilized by the TRU 150. For components running of the generator 240, consumption can be inferred by consumption of fuel by the engine 230, which can be monitored by a fuel flow meter 410 coupled to the engine 230 or engine speed from an engine controller 420 coupled to the controller 160. Alternatively, for a system powered by a generator 240, fuel consumption may be obtained by a generator controller 430, coupled to the controller 160, monitoring amperage pulled by the components of the TRU 150. Power consumption may be utilized for determining a cost of operating the TRU 150.

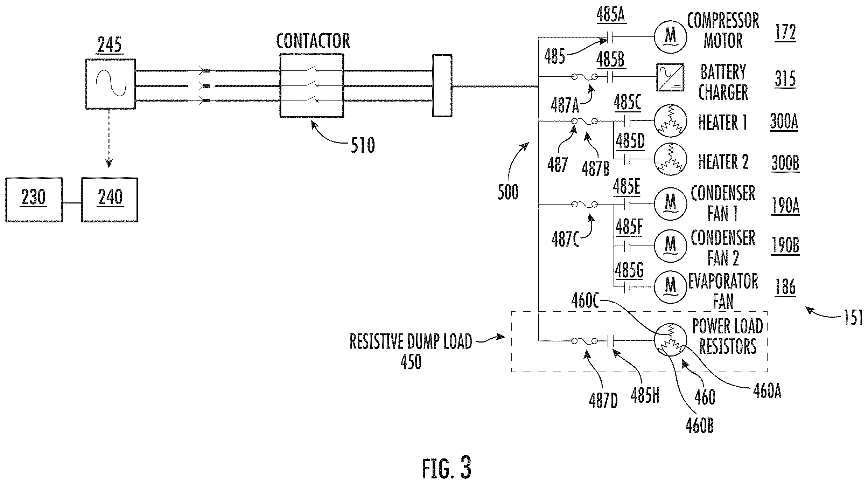

Turning to FIG. 3, the embodiments are directed to removing soot buildup in the DOC 235A and injector assembly 235B, i.e., the subsystems 235, in the power source 245 by utilizing a dump load circuit 450, having a set of dump load resistors, i.e., a set of power load resistors (PLRs) 460 utilized to increase the load on the power source 245, in addition to heating and cooling loads. The increased load on the power source 245 generates heat that removes the soot buildup in relatively light loads and cold ambient conditions, e.g., when loading is under a loading threshold for a period of time that exceeds a time threshold, where not enough load is otherwise available to remove soot buildup in the subsystems 235 of the power source 245.

More specifically, the PLR set 460 in one embodiment is arranged as three PLRs 460A, 460B, 460C (generally 460). The PLRs 460 may be wire-wound resistors or planar resistors, as nonlimiting options.

The PLRs 460 may be configured in a Y (Wye) or star configuration to be applied against the three phase power output from the generator 240. In a three-phase electrical system, PLRs 460 are arranged in a Y configuration and connected to the three-phase generator 240 for voltage balance. It is to be appreciated that the wire configuration of the PLRs is dependent on a type of utilized electrical system, such that different writing configurations are within the scope of the embodiments. The Y-configuration of the PLRs 460 allows for a balanced distribution of voltage across the phases, because in the three-phase system, the three phase voltages are typically 120 degrees out of phase with each other. The Y-connection ensures that the voltage between any two phases is equal, while a neutral point provides a stable reference. The Y-configuration of the PLRs 460 allows for more uniform load distribution. With the PLRs 460 connected in a Y-configuration, the current in each phase is balanced, which provides of the efficient operation of the generator 240 and prevents overheating or overloading of any single phase. That is, even when the load to the generator 240 varies, the load is evenly distributed across all three phases. The three-phase system in the Y-configuration of the PLRs 460 helps to reduce harmonic distortion, which is important for maintaining system stability and reducing stress on the generator 240 and other equipment connected to the generator 240. It is to be appreciated that Y (wye) configuration is not intended on limiting the scope of the embodiments.

The PLRs 460 are selectively active to increase the load on the engine 230, increasing combustion temperatures, and aiding in soot buildup removal from the DOC 235A and injector assembly 235B. The soot buildup is a carbon-based substance that forms on the oxidation catalyst and injector tips, causing black smoke. By burning off the soot buildup, the formation of black smoke is avoided.

The PLRs 460 are located within the TRU 150, but outside the cooled interior space 122 of the cargo box 120, to avoid affecting the operation of the TRU 150. Relays 485, discussed in greater detail below, are operationally coupled to the controller 160 and utilized to engage the PLRs 460, which allows the TRU 150 to bring on a parasitic load without affecting the primary functions of the TRU 150, ensuring efficient operation. That is, the generator 240, powered by the engine 230, feeds power to different components of the TRU 150, and the PLRs 460 are managed so that the power consumption of the TRU 150 to maintain within predefined requirements.

In one embodiment, the PLR set 460 and the TRU electrical implements 151 are connected to power source 245, e.g., the generator 240 powered by the engine 230, e.g., via respective relays 485A-485H, generally referenced as 485. The relays 485 are connected to ones of the compressor motor 172, the battery charger 312, the evaporator heaters 300A, 300B, the condenser fans 190A, 190B, the evaporator fan 186 and the PLR set 460. The relays 485 are connected to fuses 487 grouped by technology citatory, including a fuse 487A connected to the battery charger 312. A second fuse 487B is connected to the heaters 300A, 300B. A third fuse 487C is connected to the condenser fans 190A, 190B and the evaporator fan 186. A fourth fuse 487D is connected to the PLR set 460.

The PLR set 460 and the TRU electrical implements 151 are connected to a common bus 500. The bus 500 is connected to a contactor 510, e.g. a switch, connected to the power source 245. The contactor 510, controlled by the controller 160, increases the load applied by any of the TRU electrical implements 151 by engaging the PLR set 460, drawing additional amperage from the generator 240, causing the engine 230 to work harder, generate more heat, and burn of smoke generating soot.

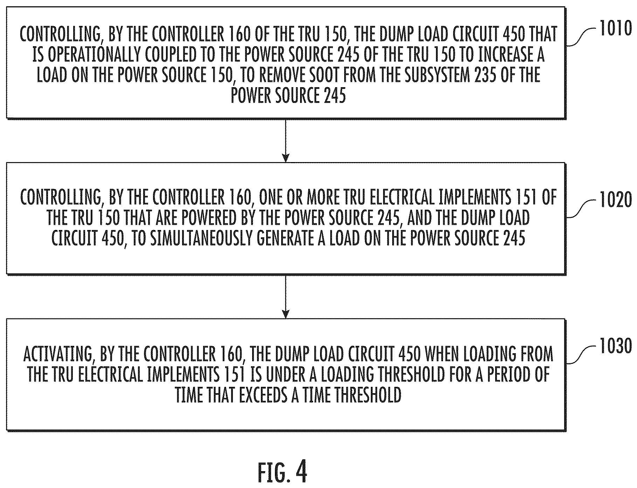

Turning to FIG. 4, a flowchart shows a method of operating the TRU 150 to remove soot buildup form the subsystems 235 of the power source 245.

As shown in block 1010, the method includes controlling, by the controller 160 of the TRU 150, the dump load circuit 450 that is operationally coupled to the power source 245 of the TRU 150 to increase a load on the power source 150. This removes soot buildup from the subsystem 235 of the power source 245.

As shown in block 1020, which provides additional or alternative details relative to the system operation shown in block 1010, the method includes controlling, by the controller 160, one or more TRU electrical implements 151 of the TRU 150 that are powered by the power source 245, and the dump load circuit 450. These components are controlled to simultaneously generate a load on the power source 245.

As shown in block 1030, which provides additional or alternative details relative to the system operation shown in blocks 1010 and 1020, the method includes activating, by the controller 160, the dump load circuit 450 when loading from the TRU electrical implements 151 is under a loading threshold for a period of time that exceeds a time threshold. During such conditions, the loading on the power source 245 may otherwise be too low to burn off the soot buildup from the subsystem 235. That is, when load is under a threshold for an extended period of time, which tends to happen under certain ambient thresholds, the dump load circuit is activated to burn or clear off the diesel soot buildup during this designated period of time. This enables a diesel engine to maintain its efficiency and reliability while not burning a significant amount of additional fuel throughout the total life of the product. That is, this operation can be executed when the load is low for a period of time, whereupon the circuit 450 is activated for a designated period of time within such scenario, thus not needing to the circuit 450 or engine to run throughout the all hours of unit operation.

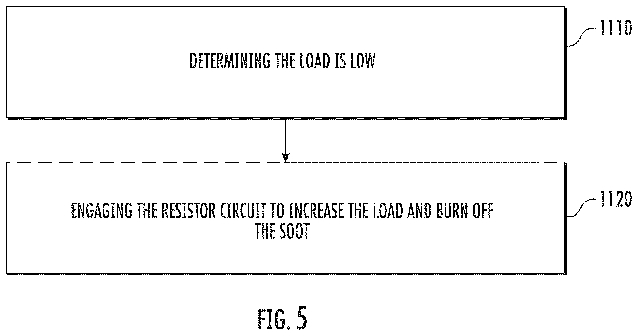

Turning to FIG. 5, another flowchart shows the operation of the disclosed system. As shown in block 1110, the method includes determining by the controller that the load is below a threshold (i.e., low). As shown in block 1120, the method includes engaging the resistor circuit (e.g., the dump load circuit), by the controller, to increase the load and thereby burn off any accumulated soot.

Benefits of the embodiments include enabling an increase in the load to allow for soot removal and prevent black smoke from being exhausted into the environment, without having to change the design of the power source 245, e.g., including sizing of the injector assembly 235B. The TRU 150 has more controllability in solving light load soot buildup and removal issues. Control is achieved by selectively increasing the electrical load of the system 100 to burn the soot, to help maintain an efficient and clean engine.

The terminology used herein is for the purpose of describing particular embodiments only and is not intended to be limiting of the present invention. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A transportation refrigeration system (100), comprising:
a cargo box (120) extending from a front end (130) to an aft end (140) and defining an interior cargo space (122) for transporting goods;
a transportation refrigeration unit, TRU, (150) at the front end of the cargo box, wherein the TRU includes a cooling system (155) to maintain the interior cargo space at a set temperature, and
wherein the TRU includes a controller (160), a power source (245) operationally coupled to the controller, and a dump load circuit (450) operationally coupled to the controller and the power source, wherein the power source includes a subsystem (235), and
the controller is configured to control the dump load circuit to increase a load on the power source, thereby removing soot buildup from the subsystem.

2. The system of claim 1, wherein the power source includes an engine (230).

3. The system of claim 2, wherein the power source includes a generator (240) powered by the engine, and optionally wherein the dump load circuit is operationally coupled to the generator.

4. The system of any of claims 1 to 3, wherein the dump load circuit includes power load resistors, PLRs, (460), and optionally wherein the PLRs are arranged in a star configuration and connected to the power source via a relay (485).

5. The system of any of claims 1 to 4, wherein the subsystem of the power source includes one or more of an injector assembly (235B) and a diesel oxidation catalyst (235A).

6. The system of any of claims 1 to 5, wherein the TRU includes TRU electrical implements (151) that are powered by the power source, wherein the controller is configured to control one or more of the TRU electrical implements and the dump load circuit to simultaneously generate the load on the power source.

7. The system of claim 6, wherein the controller is configured to activate the dump load circuit when loading from the TRU electrical implements is under a loading threshold for a period of time that exceeds a time threshold.

8. The system of claims 6 or 7, wherein the TRU electrical implements include one or more of a compressor motor (172) for powering a compressor (170) of the TRU, a battery charger (312) for an energy storage system of the TRU, evaporator heaters (300) for heating the evaporator of the TRU, an evaporator fan (186) for directing air to the evaporator, and condenser fans (190) for directing air to a condenser of the TRU.

9. A method of operating a transportation refrigeration system (100), comprising:
controlling, by a controller (160) of a transportation refrigeration unit, TRU (150), a dump load circuit (450) that is operationally coupled to a power source (245) of the TRU to increase a load on the power source, thereby removing soot buildup from a subsystem (235) of the power source.

10. The method of claim 9, wherein the power source includes an engine (230).

11. The method of claim 10, wherein the power source includes a generator (240) powered by the engine, and optionally wherein the dump load circuit is operationally coupled to the generator.

12. The method of any of claims 9 to 11, wherein the dump load circuit includes power load resistors, PLRs, (460), and optionally wherein the PLRs are arranged in a star configuration and connected to the power source via a relay (485).

13. The method of any of claims 9 to 12, wherein the subsystem of the power source includes one or more of an injector assembly (235B) and a diesel oxidation catalyst (235A).

14. The method of any of claims 9 to 13, comprising controlling, by the controller, one or more TRU electrical implements (151) of the TRU that are powered by the power source, and the dump load circuit, to simultaneously generate the load on the power source.

15. The method of claim 14, including activating, by the controller, the dump load circuit when loading from TRU electrical implements is under a loading threshold for a period of time that exceeds a time threshold; and/or
wherein the TRU electrical implements include one or more of a compressor motor (172) for powering a compressor (170) of the TRU, a battery charger (312) for an energy storage system of the TRU, evaporator heaters (300) for heating the evaporator of the TRU, an evaporator fan (186) for directing air to the evaporator, and condenser fans (190) for directing air to a condenser of the TRU.
